# EUROPÄISCHE PATENTANMELDUNG

(11) **EP 3 492 201 A1**
(43) Veröffentlichungstag der Anmeldung: **05.06.2019**
(21) Anmeldenummer: 18204064.2
(22) Anmeldetag: 02.11.2018
(51) Int. Cl.: B22F 3/105, B65D 83/06, B29C 64/259, B33Y 40/00, B65B 1/00, B65G 3/04

(54) **VORRICHTUNG ZUM ENTLEEREN UND BEFÜLLEN VON PULVERBEHÄLTERN**

(30) Priorität: 17.11.2017 DE 102017127162
(71) Anmelder: Werling, Marco, 76764 Rheinzabern (DE)
(72) Erfinder: Werling, Marco, 76764 Rheinzabern (DE)
(74) Vertreter: Geitz Truckenmüller Lucht Christ

(57) **Zusammenfassung**

Unter den bekannten additiven Konstruktionsverfahren ist auch der so genannte Metall-3D-Druck bekannt. Hierbei wird Metallpulver schichtweise innerhalb eines Bauraums aufgetragen und schichtweise mit der jeweils darunterliegenden Schicht zu einer Konstruktion verschweißt. Im Laufe einer Konstruktion füllt sich daher der ganze Bauraum mit Metallpulver, welches im Nachgang aus dem Bauraum entnommen und wiederverwendet werden kann. Nur verschweißtes oder eventuell in der Konstruktion eingeschlossenes Material kann nicht wiederverwendet werden. Die Versorgung erfolgt über Pulverbehälter, die aufgrund des dichtgepackten metallischen Inhalts sehr schwer zu handhaben sind. Daher liegt der vorliegenden Erfindung die Aufgabe zu Grunde, eine Vorrichtung bereitzustellen, mit der eine einfache Entleerung und Neubefüllung der Pulverbehälter durchgeführt werden kann.

Dies wird über ein Pulverbecken gelöst, dessen Ablauf an einen Pulverbehälter angeschlossen werden kann, so dass in das Becken abgegebene Pulvermengen direkt in den Pulverbehälter abgefüllt werden können.

## Beschreibung

Die vorliegende Erfindung betrifft eine Vorrichtung zum Entleeren und Befüllen von Pulverbehältern für Metall-3D-Drucker, umfassend ein in eine Tischplatte eingelassenes Pulverbecken mit abschüssigen Seitenwänden und einem in einem tiefsten Punkt des Pulverbeckens angeordneten Ablauf, wobei dem Ablauf Verbindungsmittel zur pulverdichten Verbindung mit einem Zulauf eines Pulverbehälters zugeordnet sind.

Eine solche Vorrichtung ist bereits aus der DE 10 2013 223 407 A1 vorbekannt. Hierbei wird ein auf einem Metall-3D-Drucker in einem Wechselbehälter hergestellter Gegenstand mit dem Behälter in eine senkrechte Karussellanordnung eingehängt und diese mit einer Öffnung so gedreht, dass unverfestigtes Material aus dem hergestellten Gegenstand über eine Öffnung in eine unterhalb angeordnete Flasche rieselt.

Auch aus der DE 10 2009 005 769 A1 ist ein ähnlicher, in einen Tisch eingelassener Gegenstand bereits bekannt. Hierbei ist der Tisch als fahrbarer Tisch ausgestaltet. Der DE 10 2016 104 677 A1 hingegen ist eine integrierte Wiederaufbereitung in einer Fertigungsanlage zu entnehmen.

In der Industrie gewinnen so genannte Metall-3D-Drucker zunehmend an Bedeutung. Sie erlauben einen schichtweisen Aufbau von Konstruktionen, indem innerhalb eines definierten Bauraums schichtweise ein Metallpulver aufgetragen wird, bis der Bauraum gefüllt oder die Konstruktion abgeschlossen ist. Hierbei wird nach Abschluss einer jeden Schicht mithilfe eines Lasers innerhalb der jeweiligen Schicht dasjenige Material verschweißt, welches zur Konstruktion gehören soll, während das andere Material lose im Bauraum verbleibt. Jede Schicht wird dabei, sofern eine solche vorhanden ist, mit der vorherigen Schicht verbunden oder eine neue erste Schicht geschaffen.

Unabhängig von der Größe der Konstruktion ist am Ende des Vorgangs prinzipiell der Bauraum zumindest teilweise mit losem, ungenutztem Metallpulver gefüllt, während lediglich die Konstruktion aufgrund des Verschweißens fest ist. Das ungenutzte Metallpulver kann hierbei ohne Weiteres wiederverwendet werden.

Zur Befüllung wird einem Metall-3D-Drucker wenigstens eine Pulverflasche oder allgemein ein Pulverbehälter zugeordnet, der in der Regel kopfüber auf dem Druckergehäuse angeflanscht wird. Das Pulver rieselt in den Metall-3D-Drucker und wird mithilfe eines Beschichters schichtweise im Bauraum verteilt.

Das nach der Konstruktion im Bauraum verbliebene lose Metallpulver kann über einen Ablauf in einen Pulverbehälter abgelassen werden, der später wieder zum schichtweisen Befüllen des Bauraums eingesetzt werden kann. Lediglich das verschweißte Material sowie eventuell in der Konstruktion eingeschlossenes Material können nicht zurückgewonnen werden.

Allerdings kann es sein, dass nicht alle Teile des Metall-3D-Druckers aufgrund der Schwerkraft in einen unter dem Bauraum angeordneten Pulverbehälter entleert werden können. Manche Teile müssen auch ausgebaut werden um sie sorgfältig zu reinigen und das Metallpulver zurückzugewinnen, so etwa der Beschichter selbst. Das Metallpulver ist sehr fein und kann sich in der Lunge eines Arbeiters absetzen und dessen Gesundheit sehr belasten. Ein sehr gründlicher Umgang mit dem Metallpulver ist neben dessen Materialwert vor allem aufgrund dieser Gesundheitsgefahr unumgänglich. Da sich manche Teile nicht ohne Weiteres in einen Pulverbehälter entleeren lassen, der zumeist über einen Flaschenhals pulverdicht verschließbar ist, wird für eine sinnvolle Handhabung eine Vorrichtung benötigt, mit der das Metallpulver leicht und vollständig in Pulverbehälter verbracht werden kann.

Vor diesem Hintergrund liegt der vorliegenden Erfindung die Aufgabe zu Grunde, eine Vorrichtung zum Entleeren und Befüllen von Pulverbehältern zu schaffen, welche die Handhabung erleichtert und den Hautkontakt mit dem Metallpulver möglichst weitgehend vermeidet.

Dies gelingt mit einer Vorrichtung zum Entleeren und Befüllen von Pulverbehältern für Metall-3D-Drucker gemäß den Merkmalen des Anspruchs 1. Weitere sinnvolle Ausgestaltungen einer solchen Vorrichtung können den sich anschließenden Unteransprüchen entnommen werden.

Erfindungsgemäß ist vorgesehen, dass eine Vorrichtung zum Entleeren und Befüllen von Pulverbehältern für Metall-3D-Drucker ein Pulverbecken aufweist, in welches Teile des Metall-3D-Druckers entleert oder als ganzes hineingelegt werden können, um diese von Metallpulver zu befreien. Das Pulverbecken ist hierzu mit abschüssigen Seitenwänden versehen, an denen das Metallpulver hinabrieseln kann, bis es in einem tiefsten Punkt des Pulverbeckens in einen Ablauf eintritt, der seinerseits Verbindungsmittel zur pulverdichten Verbindung mit einem Zulauf eines Pulverbehälters aufweist. Die Pulverbehälter weisen in der Regel Verschlusselemente auf, die mit entsprechenden Gegenstücken des Metall-3D-Druckers zusammenwirken. Entsprechend kann dem Ablauf ein Anschluss zugeordnet sein, der dem Anschluss des Metall-3D-Druckers entspricht.

Auf diese Weise ist es möglich, über das Pulverbecken beliebig anfallendes Metallpulver zu sammeln und über den Ablauf einem Pulverbehälter zuzuführen. Das auf diese Weise zurückgewonnene Metallpulver kann, wenn es wieder in einem Pulverbehälter aufgenommen ist, erneut einem Metall-3D-Drucker zugeführt werden.

Ergänzend kann der Ablauf auch ohne den Anschluss eines Pulverbehälters pulverdicht absperrbar sein, so dass in dem Pulverbecken auch Metallpulver gesammelt werden kann, wenn kein Pulverbehälter bereitsteht, oder auch bei erreichen eines Maximalfüllstands eines Pulverbehälters am Ablauf des Pulverbeckens den Ablauf zunächst zu verschließen, den vollen Pulverbehälter zu entnehmen und durch einen leeren Pulverbehälter zu ersetzen.

Ferner kann unterhalb des Ablaufs eine Aufnahme für einen Pulverbehälter gebildet sein. In eine solche Aufnahme passt ein Pulverbehälter dezidiert hinein und ist von dort aus mit dem Ablauf verbindbar. Insbesondere kann die Aufnahme hierfür eine unter dem Ablauf angeordnete, höhenverstellbare Stellplatte aufweisen. Auf eine solche Stellplatte in einem tiefsten Punkt wird in einem ersten Schritt der leere Pulverbehälter gestellt, wonach die Stellplatte dann in ihren höchsten Punkt verbracht wird. In dem höchsten Punkt wiederum greift der Zulauf des Pulverbehälters in den Ablauf des Pulverbeckens derart ein, dass Pulverbehälter und Ablauf in dieser Position miteinander pulverdicht verbunden werden können. Dies kann insbesondere mithilfe einer handbetätigten Spannvorrichtung umgesetzt werden, die eine kraftschlüssige Verbindung zwischen dem Ablauf des Pulverbeckens und einem Zulauf des Pulverbehälters herstellt. Gleichzeitig kann der Pulverbehälter auf diese Weise in der Position unter dem Ablauf gesichert werden.

Die Stellplatte wiederum kann vorzugsweise als Spindellift ausgestaltet sein, welcher aufgrund einer Drehung auf und ab beweglich ist. Hierzu kann die Stellplatte endständig auf einer Spindel angeordnet werden, welche unterhalb des Ablaufs in einer Spindelführung geführt ist. Durch eine Drehung der Stellplatte, etwa aufgrund einer Betätigung eines mit der Stellplatte oder der Spindel verbundenen Handgriffs, kann folglich die Stellplatte zwischen einer unteren und einer oberen Position in Längsrichtung der Spindel verstellt werden.

Ferner kann die Aufnahme einen Anschlag aufweisen, an welchen der Pulverbehälter unter dem Ablauf angelegt werden kann. Hierdurch ist eine korrekte Positionierung des Pulverbehälters unter dem Ablauf gewährleistet, so dass bei einem Hochfahren der Stellplatte der Zulauf des Pulverbehälters genau mit dem Ablauf des Pulverbeckens zusammenwirkt.

In konkreter Ausgestaltung kann dem Pulverbecken ein Oszillator zugeordnet sein, welcher das Einrieseln des Metallpulvers in den über den Ablauf des Pulverbeckens mit dem Pulverbecken verbundenen Pulverbehälter befördert. Wird nach dem Einfüllen des Metallpulvers in das Pulverbecken der Oszillator betätigt, so kann etwa ein Motor des Oszillators ein exzentrisch auf dessen Antriebswelle gelagertes Gewicht in exzentrische Rotation versetzen und damit das Pulverbecken in Schwingung versetzen. Diese Schwingungen können das Rieselverhalten des Metallpulvers in Richtung Ablauf verbessern.

Weiter kann das Pulverbecken in eine Tischplatte eingelassen sein, so dass die verschiedenen in das Pulverbecken zu entleerenden Teile oder auch Pulverbehälter auf der Tischplatte abgelegt und in das Pulverbecken geschoben werden können.

Die Tischplatte kann zudem über Tischbeine und an deren Enden angeordnete Radrollen zu einem rollbaren Tischwagen ergänzt werden, so dass eine Verbringung an einen Einsatzort bei einem Metall-3D-Drucker oder etwa in einem Lager gleichermaßen unproblematisch möglich ist. Hierfür kann zudem unter der Tischplatte eine Aufnahme zur Lagerung wenigstens eines, vorzugsweise mehrerer Pulverbehälter vorgesehen sein, die direkt mit dem Tischwagen transportiert werden können.

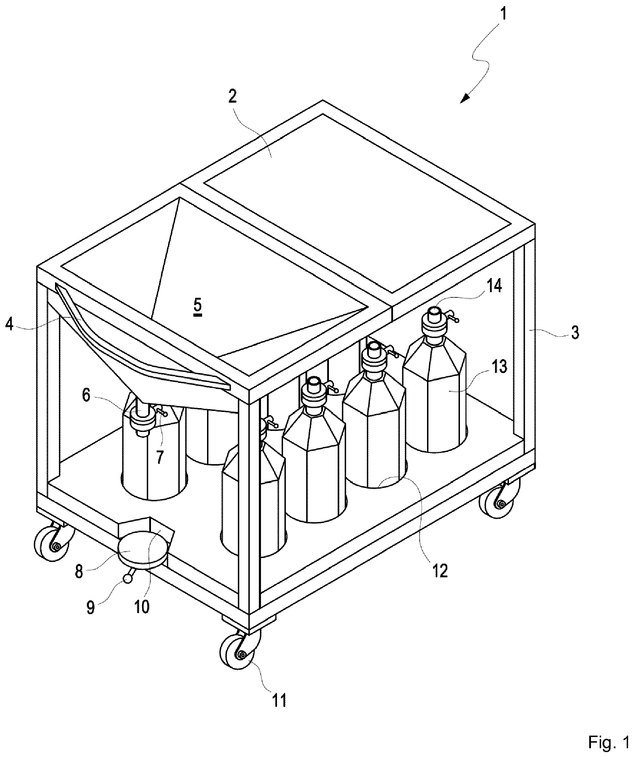

Die vorstehend beschriebene Erfindung wird im Folgenden anhand eines Ausführungsbeispiels näher erläutert. Figur 1 zeigt hierbei einen Tischwagen mit einem Pulverbecken und einer unterhalb eines Ablaufs des Pulverbeckens angeordneten Aufnahme in einer perspektivischen Darstellung von schräg oben.

Figur 1 zeigt einen Tischwagen 1 mit einer Tischplatte 2, auf welcher verschiedene Teile eines Metall-3D-Druckers oder auch zu entleerende oder zu befüllende Pulverbehälter 13 abgelegt werden können. In die Tischplatte eingelassen oder dieser benachbart zugeordnet ist ein Pulverbecken 5, in welches die Teile des Metall-3D-Druckers ausgeschüttet werden können. Das Pulverbecken 5 weist einen Ablauf 6 auf, welcher zunächst mittels einer Spannvorrichtung 7 pulverdicht absperrbar ist, aber auch mit einem Pulverbehälter 13 an dessen Zulauf 14 angeschlossen werden kann.

Wird der Ablauf 6 geschlossen, so kann in das Pulverbecken 5 einrieselndes Metallpulver von dem verschlossenen Ablauf 6 aufgehalten werden und sammelt sich in dem Pulverbecken 5. Wird dann in einem weiteren Schritt ein Pulverbehälter 13 mit dem Ablauf 6 verbunden, so kann der Ablauf 6 wieder geöffnet werden, so dass das Metallpulver in den dann angeschlossenen Pulverbehälter einrieseln kann. Dies kann über einen im Bild nicht explizit gezeigten Oszillator beschleunigt werden.
Wird ein Pulverbehälter 13 in die Aufnahme unter dem Ablauf 6 eingestellt, so steht der Pulverbehälter 13 mit seinem Boden auf einer Stellplatte 8, welche endständig auf einer Spindel angeordnet ist. Mittels eines Handgriffs 9 kann die Stellplatte 8 mit der Spindel gedreht und hierdurch angehoben werden, so dass der Pulverbehälter 13 mit seinem Zulauf 14 in Eingriff des Ablaufs 6 gerät und kann so mit diesem verbunden werden. Damit eine sorgfältige Ausrichtung des schweren Pulverbehälters 13 unter dem Ablauf 6 leicht möglich ist, kann dieser mit dem formschlüssigen Anschlag 10 der Aufnahme gebracht werden. Ein so ausgerichteter Pulverbehälter 13 steht mit seinem Zulauf 14 direkt in der korrekten Position unter dem Ablauf 6 des Pulverbeckens 5.

Zur Erhöhung der Tischplatte 2 über den Boden ist diese auf Tischbeinen 3 gelagert, denen zudem für eine bessere Beweglichkeit endständige Rollräder 11 zugeordnet sind. Mithilfe eines Griffs 4 kann der so entstehende Tischwagen 1 an beliebige Einsatzorte geschoben werden. Mit einer Aufnahme 12 für einen oder mehrere Pulverbehälter 13 kann der Tischwagen 1 zudem zum Transport der sehr schweren Pulverbehälter 13 eingesetzt werden.

Vorstehend beschrieben ist somit eine Vorrichtung zum Entleeren und Befüllen von Pulverbehältern für Metall-3D-Drucker, welche ein Pulverbecken vorsieht, unter dessen Ablauf eine Verbindungsvorrichtung für Pulverbehälter, zur Aufnahme in das Pulverbecken eingefüllten Metallpulvers angeordnet ist.

### BEZUGSZEICHENLISTE

- 1: Tischwagen
- 2: Tischplatte
- 3: Tischbein
- 4: Griff
- 5: Pulverbecken
- 6: Ablauf
- 7: Spannvorrichtung
- 8: Stellplatte
- 9: Handgriff
- 10: Anschlag
- 11: Radrolle
- 12: Aufnahme
- 13: Pulverbehälter
- 14: Zulauf

## Patentansprüche

1. Vorrichtung zum Entleeren und Befüllen von Pulverbehältern (13) für Metall-3D-Drucker, umfassend ein in eine Tischplatte (2) eingelassenes Pulverbecken (5) mit abschüssigen Seitenwänden und einem in einem tiefsten Punkt des Pulverbeckens (5) angeordneten Ablauf (6), wobei dem Ablauf (6) Verbindungsmittel zur pulverdichten Verbindung mit einem Zulauf (14) eines Pulverbehälters (13) zugeordnet sind,
**dadurch gekennzeichnet, dass** unterhalb des Ablaufs (6) des Pulverbeckens (5) eine Aufnahme für einen Pulverbehälter (13) gebildet ist, welche eine unter dem Ablauf (6) angeordnete, höhenverstellbare Stellplatte (8) aufweist, wobei diese höhenverstellbare Stellplatte (8) in einer tiefsten Position das Einstellen eines Pulverbehälters (13) unter den Ablauf (6) erlaubt und in einer höchsten Position einen Zulauf (14) eines auf der Stellplatte (8) stehenden Pulverbehälters (13) mit dem Ablauf (6) des Pulverbeckens (5) in Eingriff bringt.

2. Vorrichtung gemäß Anspruch 1, **dadurch gekennzeichnet, dass** der Ablauf (6) pulverdicht absperrbar ist.

3. Vorrichtung gemäß einem der Ansprüche 1 oder 2, **dadurch gekennzeichnet, dass** die Stellplatte (8) als Spindellift ausgestaltet ist, wobei die Stellplatte (8) auf einer senkrecht angeordneten Spindel befestigt ist, welche durch Drehung, vorzugsweise vermittels eines Handgriffs (9), unter Mitnahme der Stellplatte (8), in Längsrichtung beweglich ist.

4. Vorrichtung gemäß einem der vorhergehenden Ansprüche, **dadurch gekennzeichnet, dass** die Aufnahme einen Anschlag (10) zur, vorzugsweise formschlüssigen, Anlage eines Pulverbehälters (13) aufweist.

5. Vorrichtung gemäß einem der vorhergehenden Ansprüche, **dadurch gekennzeichnet, dass** die pulverdichte Verbindung des Ablaufs (6) des Pulverbeckens (5) mit einem Zulauf (14) eines Pulverbehälters (13) mittels einer handbetätigten Spannvorrichtung (7) des Ablaufs (6) oder des Zulaufs (14) erfolgt.

6. Vorrichtung gemäß einem der vorhergehenden Ansprüche, **dadurch gekennzeichnet, dass** dem Pulverbecken (5) ein Oszillator, vorzugsweise ein Motor mit einem exzentrisch auf einer Antriebsachse angeordneten Gewicht, innig anverbunden ist.

7. Vorrichtung gemäß einem der vorhergehenden Ansprüche, **dadurch gekennzeichnet, dass** die Tischplatte (2) auf einem rollbaren Tischwagen (1) ausgestaltet ist und vorzugsweise unterhalb der Tischplatte (2) wenigstens eine Aufnahme (12) zur Lagerung wenigstens eines Pulverbehälters (13) aufweist.
